# EUROPÄISCHE PATENTSCHRIFT

(11) **EP 0 522 453 B1**
(45) Veröffentlichungstag und Bekanntmachung des Hinweises auf die Patenterteilung: **15.03.1995**
(21) Anmeldenummer: 92111259.5
(22) Anmeldetag: 02.07.1992
(51) Int. Cl.: B23F 5/16, B23F 23/12

(54) **Verfahren zum Erzeugen von nach innen tiefer werdenden Hinterlegungen an geraden Innenverzahnungen**
Method for producing inside deepening undercuts on internal gear tooth systems
Procédé pour obtenir des dentures intérieures ayant des parties chanfreinées

(30) Priorität: 06.07.1991 DE 4122460
(43) Veröffentlichungstag der Anmeldung: 13.01.1993
(73) Patentinhaber: PRÄWEMA WERKZEUGMASCHINENFABRIK GmbH, 37269 Eschwege (DE)
(72) Erfinder: Reuter, Wolfgang,Dipl.-Ing., W-5276 Wiehl (DE)
(74) Vertreter: Sparing Röhl Henseler Patentanwälte

(56) Entgegenhaltungen:
- DE-B- 2 603 826
- DE-U- 8 607 328
- GB-A- 2 231 520
- IT-A- 541 693
- US-A- 3 570 367
- G. SPUR ET AL. 'Handbuch der Fertigungstechnik' 1980 , CARL HANSER VERLAG , MNCHEN USW.

## Beschreibung

Die Erfindung betrifft ein Verfahren zum Erzeugen von nach innen tiefer werdenden Hinterlegungen an geraden Innenverzahnungen; siehe z.B. DE-B 26 03 826.

Es ist bekannt, Hinterlegungen an Schiebemuffen, wie sie beispielsweise in Kraftfahrzeuggetrieben verwendet werden, durch einen Walzvorgang zu erzeugen. Dies ist aber mit einem Materialwulst am Innenprofil verbunden, der eine Nachräumung erfordert. Abgesehen davon ist hierzu ein Walzwerkzeug notwendig, das die Form der zu erzeugenden Hinterlegung wiedergibt, so daß Veränderungen nicht ohne Werkzeugänderung möglich sind.

Außerdem ist an sich bekannt, Innenverzahnungen als solche durch Wälzschälen mit einem Schälrad herzustellen, wobei Schälrad und Werkstück mit gekreuzten Achsen kämmen. Hierbei werden Schälrad und Werkstück um die Zahntiefe einander zugestellt, Schälrad und Werkstück einer synchronisierten Drehbewegung unterworfen und das Schälrad oder das Werkstück parallel zur Werkstückachse mit einer bestimmten Vorschubgeschwindigkeit bewegt. Hiermit lassen sich jedoch keine Hinterlegungen, sondern nur die Innenverzahnungen herstellen.

Aufgabe der Erfindung ist es, ein Verfahren der eingangs genannten Art zu schaffen, mit dem Hinterlegungen ohne eine zusätzliche Nachbearbeitung in einem Arbeitsvorgang herstellbar sind.

Diese Aufgabe wird dadurch gelöst, daß die Innenverzahnung durch Wälzschälen mit einem Schälrad, das einem gleichzeitigen Axial- und Radialvorschub bis zum Erreichen der geforderten Hinterlegungstiefe unterliegt, bearbeitet wird.

Durch Änderung der Vorschubbewegung kann die Form der Hinterlegungen geändert werden, ohne daß eine Werkzeugänderung notwendig wäre. Das Verfahren eignet sich insbesondere zur Herstellung von Hinterlegungen an Schiebemuffen, wie sie beispielsweise in Kraftfahrzeuggetrieben verwendet werden.

Weitere Ausgestaltungen der Erfindung sind der nachfolgenden Beschreibung und den Unteransprüchen zu entnehmen.

Die Erfindung wird nachstehend anhand des in den beigefügten Abbildungen schematisch dargestellten Ausführungsbeispiels näher erläutert.

Fig. 1 zeigt schematisch in perspektivischer Ansicht eine Vorrichtung zum Erzeugen von Hinterlegungen an geraden Innenverzahnungen.

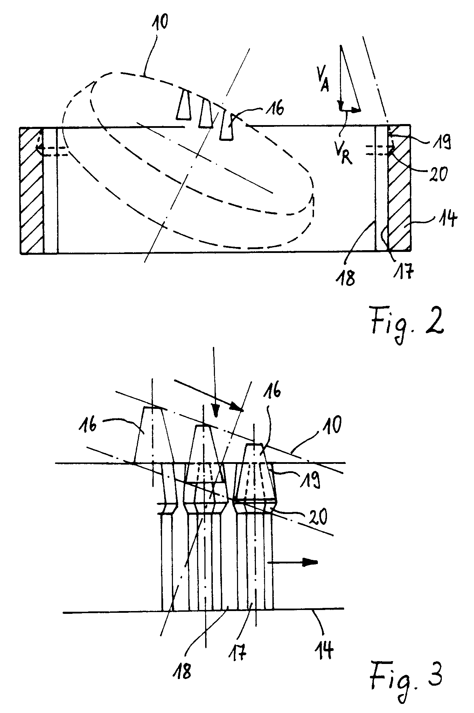

Fig. 2 zeigt schematisch die Einstellung von Werkzeug und Werkstück in Bearbeitungsstellung.

Fig. 3 zeigt vergrößert einen Ausschnitt aus Fig. 2.

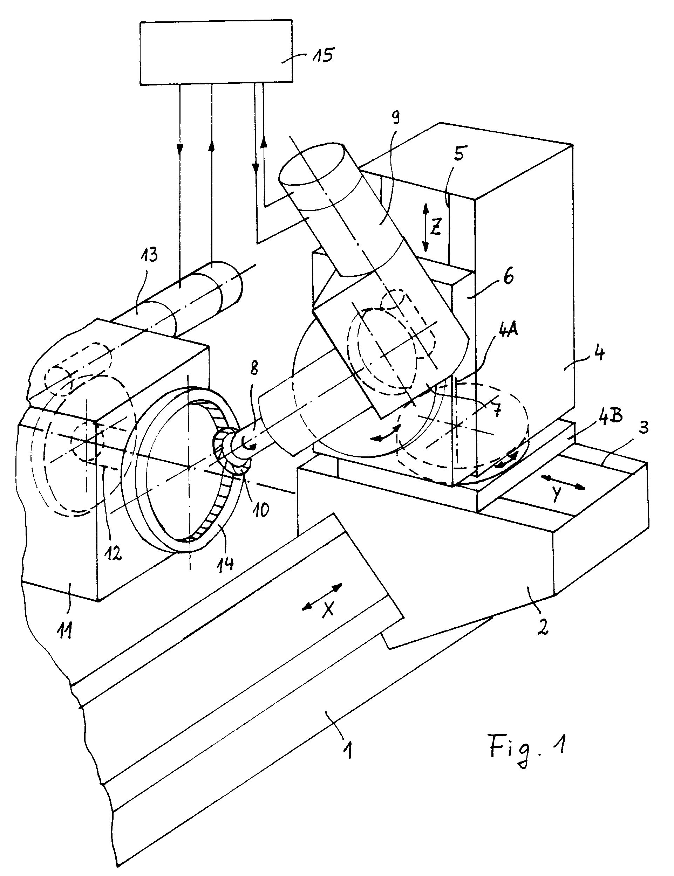

Die in Fig. 1 dargestellte Vorrichtung umfaßt eine Horizontal-Geradführung 1 zum Führen eines Schlittens 2 längs einer X-Achse. Der Schlitten 2 trägt eine Horizontal-Geradführung 3 für einen Spindelständer 4 zum Führen von diesem längs einer zur X-Achse senkrechten Y-Achse. Der Spindelständer 4 trägt eine Vertikal-Geradführung 5 für einen Schlitten 6 zum vertikalen Führen desselben längs einer zur XY-Ebene senkrechten Z-Achse. Der Schlitten 6 nimmt um eine horizontale Drehachse drehbar einen Werkzeugspindelkasten 7 auf, dessen Werkzeugspindel 8 mittels eines Servomotors 9 antreibbar ist und an ihrem freien Ende als Werkzeug ein Schälrad 10 trägt.

Ferner umfaßt die Vorrichtung einen Spindelkasten 11 mit einer Werkstückspindel 12, die über einen Servomotor 13 antreibbar ist und an ihrem freien Ende als mit einer geraden Innenverzahnung versehenes Werkstück 14 beispielsweise eine Schiebemuffe aufnimmt.

Die Achse der Werkstückspindel 12 verläuft in einer Ebene parallel zur XY-Ebene und senkrecht zur Drehachse des Werkzeugspindelkastens 7, so daß die Achsen der Spindeln 8, 12 sich kreuzend angeordnet werden können.

Die Servomotoren 9, 13 sind mit einer CNC-Steuerung 15 gekoppelt, damit die Spindeln 8 und 12 synchronisiert umlaufen.

Das Schälrad 10 und das Werkstück 14 werden mit gekreuzten Achsen zueinander angeordnet, wobei der Winkel zwischen den beiden Achsen insbesondere zwischen etwa 18 und 35° liegt, um eine gute Schälleistung zu erzielen. - Um die Freiwinkel einstellen zu können, ist der Spindelständer 4 um eine Vertikalachse 4A gegenüber einem längs der Horizontal-Geradführung 3 verfahrbaren Schlitten 4B schwenkbar.

Das Schälrad 10 besitzt stirnseitige Zähne 16, die in Einschraubrichtung des Schälrades 10 an den Flanken und Kopfseiten konisch verbreitert sind.

Das mit dem Werkstück 14 kämmende Schälrad 10, dessen Zähne 16 in Richtung der Achse der Innenverzahnung des Werkstücks 14 angeordnet werden, unterliegt über entsprechende Schlittenantriebe einem gleichzeitigen Axial- und Radialvorschub und taucht so mit den breiteren Stirnseiten seiner Zähne 16 voran in die Zahnlücken 17 zwischen den Zähnen 18 der geraden Innenverzahnung des Werkstücks 14 ein und erzeugt nach innen tiefer werdende Ausarbeitungen zwischen den Zähnen 18, die Hinterlegungen 19. Bei Erreichen der gewünschten Hinterlegungstiefe werden die Vorschubbewegungen gestoppt, und es entsteht ein Übergang 20 gemäß der Eindringkontur des Schälrades 10. Das Schälrad 10 wird dann im Eilgang aus der Endposition zurückgezogen, womit die Bearbeitung beendet ist.

Durch Wahl entsprechender Vorschubverhältnisse kann die Form der Hinterlegung 19 geändert werden.

## Patentansprüche

1. Verfahren zum Erzeugen von nach innen tiefer werdenden Hinterlegungen (19) an geraden Innenverzahnungen, dadurch **gekennzeichnet,** daß die Innenverzahnung durch Wälzschälen mit einem Schälrad (10), das einem gleichzeitigen Axial- und Radialvorschub bis zum Erreichen der geforderten Hinterlegungstiefe unterliegt, bearbeitet wird.

2. Verfahren nach Anspruch 1, dadurch gekennzeichnet, daß die Innenverzahnung und das Schälrad (10) unter einem Winkel etwa zwischen 18 bis 35° kämmen.

3. Verfahren nach Anspruch 1 oder 2, dadurch gekennzeichnet, daß ein Schälrad (10) verwendt wird, dessen Zähne (16) sich konisch in Einschraubrichtung des Schälrades (10) an den Flanken und den Kopfseiten verbreitern.

4. Verfahren nach einem der Ansprüche 1 bis 3, dadurch gekennzeichnet, daß eine Vorrichtung verwendet wird, die eine Werkstückspindel (12) zur Aufnahme eines mit der Innenverzahnung versehenen Werkstücks (14) und eine Werkzeugspindel (8) zur Aufnahme eines Schälrades (10) aufweist, wobei die Drehbewegungen der beiden Spindeln (8, 12) durch eine CNC-Steuerung (15) synchronisiert und das Werkzeug (10) und das Werkstück (14) durch zwei längs zueinander senkrecht angeordneten Führungen (1, 3) bewegliche Schlitten (2, 4) axial und radial relativ zueinander verschiebbar sowie mit ihren Achsen zueinander kreuzbar sind.

5. Verfahren nach Anspruch 4, dadurch gekennzeichnet, daß das Schälrad (10) und das Werkstück (14) relativ zueinander in einer Richtung senkrecht zu der durch die Führungen (1, 3) definierten Bewegungsebene verschoben werden.

6. Verfahren nach einem der Ansprüche 1 bis 5, dadurch gekennzeichnet, daß die Hinterlegungen (19) an Schiebemuffen erzeugt werden.

## Claims

1. Method of producing undercuts (19), which increase in depth towards the inside, on straight internal toothings, characterized in that the internal toothing is machined by hob peeling with a peeling wheel (10) which is subjected to simultaneous axial and radial feeding until the required undercut depth is reached.

2. Method according to Claim 1, characterized in that the internal toothing and the peeling wheel (10) mesh at an angle of approximately between 18 and 35°.

3. Method according to Claim 1 or 2, characterized in that a peeling wheel (10) is used whose teeth (16) widen conically, in the screw-in direction of the peeling wheel (10), on the flanks and head sides.

4. Method according to one of Claims 1 to 3, characterized in that a device is used which has a work-piece spindle (12) to hold a workpiece (14) provided with the internal toothing and has a tool spindle (8) to hold a peeling wheel (10), the rotary movements of the two spindles (8, 12) being synchronized by a CNC control (15) and, with the aid of two slides (2, 4) movable along guides (1, 3) arranged at right angles to one another, the tool (10) and the workpiece (14) are displaceable axially and radially relative to each other and their axes can be crossed relative to each other.

5. Method according to Claim 4, characterized in that the peeling wheel (10) and the workpiece (14) are displaced relative to each other in a direction at right angles to the plane of movement defined by the guides (1, 3).

6. Method according to one of Claims 1 to 5, characterized in that the undercuts (19) are produced on sliding sleeves.

## Revendications

1. Procédé de réalisation de passes (19) qui deviennent plus profondes vers l'intérieur, sur des dentures intérieures droites, caractérisé en ce que la denture intérieure est travaillée par décolletage en développante avec un pignon de décolletage (10), lequel est soumis à une avance axiale et radiale simultanées jusqu'à l'obtention de la profondeur de passe voulue.

2. Procédé selon la revendication 1, caractérisé en ce que la denture intérieure et le pignon de décolletage (10) sont sous un angle compris entre environ 18° à 35°.

3. Procédé selon la revendication 1 ou 2, caractérisé en ce qu'on utilise un pignon de décolletage (10), dont les dents (16) présentent des flancs qui s'élargissent coniquement dans le sens d'avance du pignon de décolletage (10).

4. Procédé selon l'une des revendications 1 à 3, caractérisé en ce qu'on utilise un dispositif qui présente une broche porte-pièce (12) recevant une pièce à usiner munie de la denture intérieure et une broche porte-outil (8) munie d'un pignon de décolletage (10), les mouvements de rotation des deux broches (8, 12) étant synchronisés par commande numérique à l'aide d'un ordinateur (CNC) (15), l'outil (10) et la pièce à usiner (14), d'une part, étant déplaçables axialement et radialement l'un par rapport à l'autre au moyen de deux chariots (2, 4) mobiles longitudinalement sur des glissières (1, 3) orthogonales entre elles et, d'autre part, présentant des axes qui peuvent être sécants.

5. Procédé selon la revendication 4, caractérisé en ce que le pignon de décolletage (10) et la pièce à usiner (14) sont déplacés relativement l'un par rapport à l'autre dans une direction perpendiculaire au plan de mouvement défini par les glissières (1, 3).

6. Procédé selon l'une des revendications 1 à 5, caractérisé en ce que les passes (19) sont effectuées sur des crabots.
